# EUROPEAN PATENT APPLICATION

(11) **EP 1 132 855 A2**
(43) Date of publication of application: **12.09.2001**
(21) Application number: 01301998.9
(22) Date of filing: 05.03.2001
(51) Int. Cl.: G06K 11/18

(54) **Input device and portable electronic device using the same**

(30) Priority: 10.03.2000 JP 2000072475; 15.03.2000 JP 2000077823
(71) Applicant: ALPS ELECTRIC CO., LTD., Ota-ku Tokyo 145 (JP)
(72) Inventor: Takahashi, Kisaburo, Otsuka-cho, Ota-ku, Tokyo 145 (JP)
(74) Representative: Kensett, John Hinton

(57) **Abstract**

An input device is disclosed wherein first and second rotary electric parts (D1, D2) are operated by first and second operating members (18) respectively. The input device can exhibit a large number of functions than in the prior art and is suitable for use in a portable electronic device for which various functions are required.

## Description

### BACKGROUND OF THE INVENTION

### Field of the Invention

The present invention relates to an input device for use in a portable electronic device such as a portable telephone set, as well as a portable electronic device using the input device.

### Description of the Prior Art

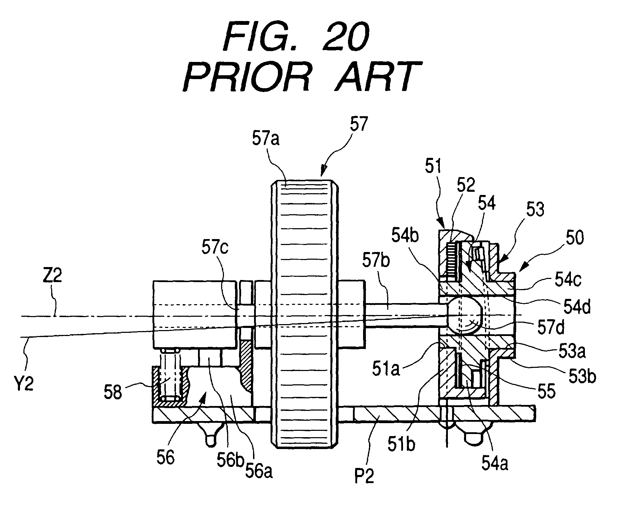

The configuration of a conventional input device will now be described with reference to Fig. 20. A rotary electric part 50 is constituted by a rotary encoder, and an insulating base 51 formed by molding a synthetic resin and constituting the rotary electric part 50, is provided with a substrate portion 51b having a central circular hole 51a, with plural contact pieces 52 being embedded in the substrate portion 51b.

A cover 53 of the rotary electric part 50 is provided with a cylindrical portion 53b having a circular hole 53a. The cover 53 is attached to the insulating base 51 so as to cover an opening portion of the insulating base.

A rotor 54 of the rotary electric part 50, which rotor is formed by molding a synthetic resin, is provided with a disc portion 54a, shaft portions 54b and 54c projecting from both sides of the disc portion 54a, and a hexagonal, non-circular through hole 54d formed in a central part of the rotor 54. Code patterns 55 are formed on a surface of the disc portion 54a.

In the rotor 54 constructed as above, the shaft portion 54b is fitted in the hole 51a of the insulating base 51 and the shaft portion 54c is fitted in the hole 53a of the cylindrical portion 53b. Further, the rotor 54 is sandwiched axially and rotatably between the insulating base 51 and the cover 53.

By both insulating base 51 and cover 53 the rotor 54 is held so as not to tilt in the axial direction.

When the rotor 54 is mounted, the code patterns 55 formed on the rotor come into contact with the contact pieces 52, and upon rotation of the rotor 54, the code patterns 55 also rotate in sliding contact with the contact pieces 52 and produce pulse signals. The rotary electric part 50 thus constructed is mounted to a printed circuit board P2.

The conventional input device has a push-switch 56. The push-switch 56 is provided with a housing 56a formed by molding a synthetic resin and with a contact portion (not shown) housed therein and is also provided with a push-button 56b attached to the housing 56a movably. The push-switch 56 is mounted to the printed circuit board P2 in a predetermined spaced position from the rotary electric part 50.

An operating member 57 is provided with an operating portion 57a of a large diameter, shafts 57b and 57c projecting from both sides of the operating portion 57a, and a regular hexagonal sphere portion 57d formed at one end of the shaft 57b.

The operating member 57 is mounted by inserting the regular hexagonal sphere portion 57d on the shaft 57b side into the through hole 54a of the rotor 54 from the insulating base 51 side and by holding the shaft 57c with the housing 56a. A coiled spring 58 is disposed between the shaft 57c and the housing 56a so that the operating member 57 is positioned on a horizontal line Z2.

According to this arrangement, the operating member 57 can perform both a rotating motion and a tilting motion with the abutment portion of the regular hexagonal sphere portion 57d against the rotor 54 as fulcrum.

In the conventional input device having such a configuration, when the operating portion 57a of the operating member 57 is rotated, the rotor 54 is rotated by the regular hexagonal sphere portion 57d of the shaft 57b and the code patterns 55 rotate in sliding contact with the contact pieces 52, producing pulse signals.

If the operating member 57 is pushed in a direction perpendicular to the axial direction (i.e., horizontal line Z2), the shaft 57c moves against the coiled spring 58 with the abutment portion of the regular hexagonal sphere portion 57d against the rotor 54 as fulcrum, the operating member 57 tilts to the position indicated with an inclined line Y2, and the push-button 56b is pushed by the shaft 57c to operate the push-switch 56.

Upon release of the operating member 57, the operating member returns to its original position on the horizontal line Z2 under the action of the coiled spring 58 and the push-switch 56 also reverts to its original state.

In the case where the conventional input device, which is operated in such a manner, is used in a portable electronic device for example, a vertical or transverse scrolling operation is performed by the rotary electric part 51, and an operation for decision is performed by the push-switch.

In the conventional input device, since one rotary electric part 51 and the push-switch 56 are operated by one operating member 57, the number of functions available is small and thus the conventional input device is unsuitable for a portable electronic device for which various functions are required and is not convenient for use.

When the operating member 57 tilts in the conventional input device, the regular hexagonal sphere portion 57d performs a circular motion with respect to the rotor 54, and for allowing the circular motion to be carried out smoothly, the regular hexagonal sphere portion 57d is fitted in the through hole 54d loosely. Consequently, between the regular hexagonal sphere portion 57d and the rotor 54 there occurs a play in the rotational direction upon rotation of the operating member 57, so that the rotation of the operating member 57 cannot immediately be transmitted to the rotor 54.

Further, as the tilting motion of the operating member 57 is repeated, there occurs wear between the regular hexagonal sphere portion 57d and the rotor 54, so that the play in the rotational direction becomes larger, making it more and more distant from the possibility of immediate transfer of the rotation of the operating member 57 to the rotor 54.

### SUMMARY OF THE INVENTION

Accordingly, it is an object of the present invention to provide a small-sized, input device which is suitable for a portable electronic device required to have various functions and which is convenient for use, as well as a portable electronic device using the input device.

According to the first solving means adopted by the invention for solving the above-mentioned problems there is provided an input device comprising a first operating member for operating a first rotary electric part, the first operating member being rotatable, and a second operating member for operating a second rotary electric part, the second operating member being also rotatable, the first and second operating members being each provided, on an outer peripheral portion in an axial direction thereof, with an operating portion for performing an operation in a direction orthogonal to the axial direction, the first and second operating members being disposed so as to be positioned close to each other in one and the same plane and so that the respective axial directions are orthogonal to each other.

Preferably, the first and second operating members are arranged in T shape so that the axial direction of the second operating member intersects the axial direction of the first operating member at an intermediate position in the axial direction of the operating portion of the first operating member.

Alternatively, the first and second operating members are arranged in L shape.

Preferably, there is provided an input device wherein a knurled portion is formed on a surface of each of the operating portions, the knurled portion being formed by a concave-convex portion in the axial direction of the associated operating member.

Preferably, one of the first and second operating members can tilt with the associated first or second rotary electric part as fulcrum when pushed in a direction perpendicular to the axial direction thereof, and a push-switch is operated by the tilting motion.

Preferably, both the first and second operating members can tilt with the first and second rotary electric parts as fulcrums when pushed in directions perpendicular to the respective axial directions, and a push-switch is operated by the tilting motion of each of the first and second operating members.

According to another aspect of the present invention there is provided a portable electronic device comprising a case having a display in a front wall thereof, a first operating member for operating a first rotary electric part disposed within the case, the first operating member being rotatable, and a second operating member for operating a second rotary electric part disposed within the case, the second operating member being also rotatable, the first and second operating members being each provided, on an outer peripheral portion in an axial direction thereof, with an operating portion for performing an operation in a direction orthogonal to the axial direction, the first and second operating members being disposed so as to be positioned close to each other in one and the same plane, allowing the respective operating portions to be partially exposed from the front wall of the case, and so that the respective axial directions are orthogonal to each other.

Preferably, the first and second operating members are positioned close to the display.

Preferably, the first and second operating members are arranged in T shape.

Alternatively, the first and second operating members are arranged in L shape.

Preferably, a knurled portion is formed on a surface of each of the operating portions, the knurled portion being formed by a concave-convex portion in the axial direction of the associated operating member.

Preferably, one of the first and second operating members can tilt with the rotary electric part as fulcrum when pushed in a direction perpendicular to the axial direction thereof, and a push-switch is operated by the tilting motion.

Preferably, both the first and second operating members can tilt with the rotary electric part as fulcrum when pushed in directions perpendicular to the respective axial directions, and a push-switch is operated by the tilting motion.

According to another aspect of the present invention there is provided an input device comprising a first rotary electric part having a rotor, a first operating member for operating the first rotary electric part, the first operating member having a first shaft fitted in a non-circular hole formed in the rotor of the first rotary electric part, a second rotary electric part having a rotor, and a second operating member for operating the second rotary electric part, the second operating member having a second shaft fitted in a non-circular hole formed in the rotor of the second rotary electric part, the first and second operating members being positioned in alignment with each other.

Preferably, the first operating member is further provided with an operating portion and a third shaft, and the second operating member is further provided with an operating portion and a fourth shaft, the third and fourth shafts being located respectively on the sides opposite to the first and second shafts with respect to the operating portions and in proximity to each other.

Preferably, one push-switch is disposed below the third and fourth shafts so as to straddle both shafts, the first or the second operating member tilts when pushed in a direction perpendicular to its axial direction, and the push-switch is operated thereby.

According to a further aspect of the present invention there is provided a portable electronic device having an input device, the input device comprising a first rotary electric part having a rotor, a first operating member for operating the first rotary electric part, the first operating member having a first shaft fitted in a non-circular hole formed in the rotor of the first rotary electric part, a second rotary electric part having a rotor, and a second operating member for operating the second rotary electric part, the second operating member having a second shaft fitted in a non-circular hole formed in the rotor of the second rotary electric part, the first and second operating members being positioned in alignment with each other.

An embodiment of the present invention will now be described by way of example only, with reference to the accompanying diagrammatic drawings, in which:
Fig. 1 is a sectional view of a principal portion of an input device according to the first embodiment of the present invention;
Fig. 2 is an enlarged sectional view of a principal portion, illustrating the operation of the input device shown in Fig. 1;
Fig. 3 is a front view of an encoder used in the input device;
Fig. 4 is a rear view of the encoder shown in Fig. 3;
Fig. 5 is a top view of the encoder shown in Fig. 3;
Fig. 6 is a bottom view of the encoder shown in Fig. 3:
Fig. 7 is an exploded perspective view of the encoder shown in Fig. 3;
Fig. 8 is a sectional side view of a principal portion of the encoder shown in Fig. 3;
Fig. 9 is a sectional front view of a principal portion of the encoder shown in Fig. 3;
Fig. 10 is a perspective view showing a combination of an insulating base and a rotor in the encoder illustrated in Fig. 3;
Fig. 11 is a sectional view of a rotor used in the encoder shown in Fig. 3;
Fig. 12 is a perspective view of the encoder shown in Fig. 3;
Fig. 13 is a side view of the encoder shown in Fig. 3;
Fig. 14 is a sectional view of the encoder shown in Fig. 3;
Fig. 15 is a sectional plan view of a principal portion of an input device according to the second embodiment of the present invention;
Fig. 16 is a sectional view taken on line 16-16 in Fig. 15;
Fig. 17 is a sectional view showing the operation of the input device illustrated in Fig. 15;
Fig. 18 is a partially cut-away plan view of a portable electronic device according to the present invention;
Fig. 19 is a side view of the portable electronic device shown in Fig. 18; and
Fig. 20 is a partially sectional front view of a conventional input device.

### DETAILED DESCRIPTION OF THE PREFERRED EMBODIMENTS

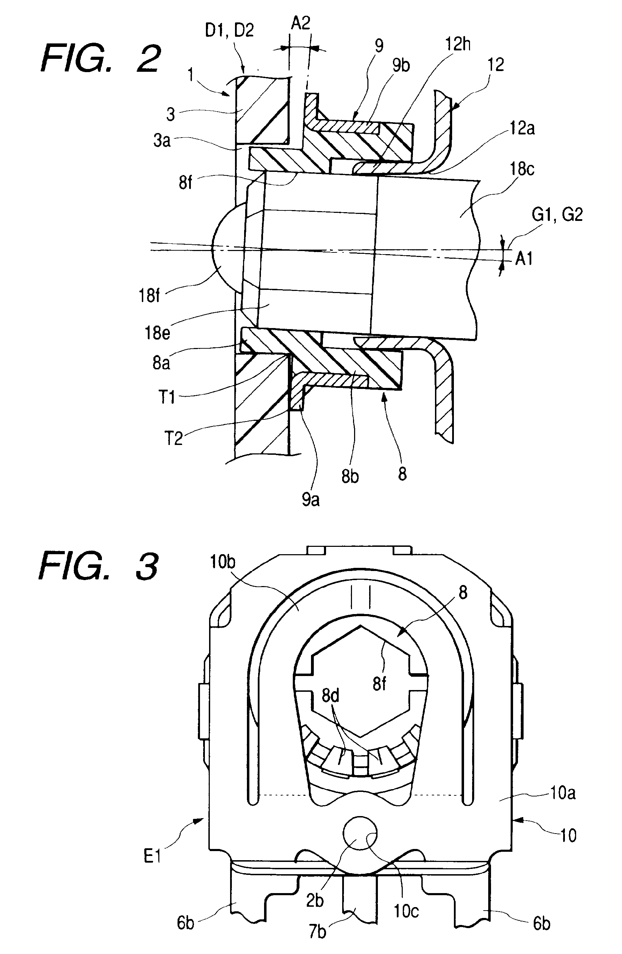

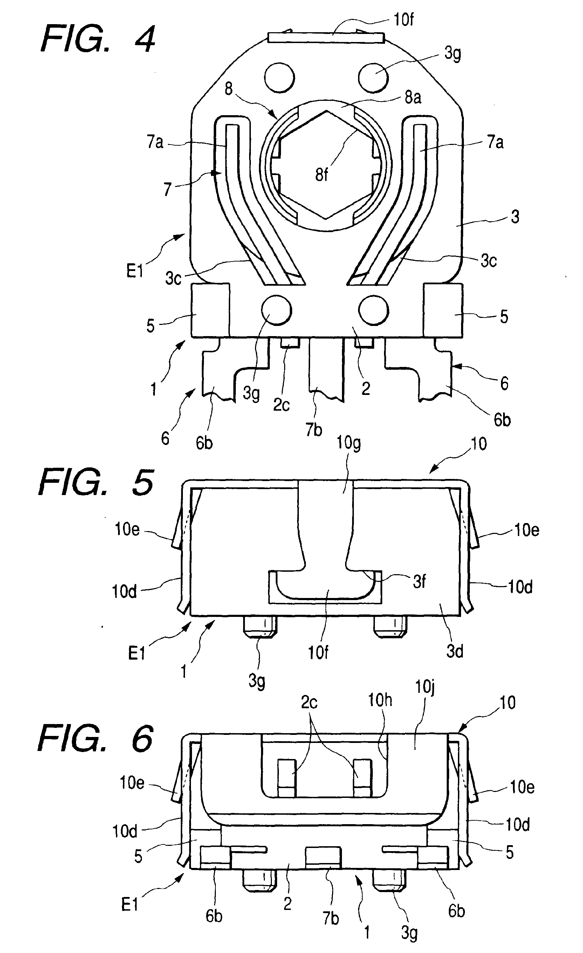

With reference to Figs. 3 to 14, a description will first be given about the configuration of a rotary electric part D used in an input device and a portable electronic device both embodying the present invention. The rotary electric part D used in this embodiment is formed as a rotary encoder. An insulating base 1, which is formed by molding an insulating material, is made up of a rectangular main base portion 2, a side wall portion 3 which is upright at right angles from the main base portion 2, and a pair of sub-base portions 5 connected respectively both sides of the main base portion 2 through thin-walled portions 4.

The main base portion 2 is provided with recesses 2a formed respectively in end faces on both sides, a cylindrical protrusion 2b formed centrally on a front end face, and a pair of retaining portions 2c formed on a lower surface of the main base portion and each having a tapered portion.

The side wall portion 3 is formed upright from corners of an upper surface of the main base portion 2. The side wall portion 3 is provided with a central circular hole 3b having a flange 3a, a pair of relief holes 3c extending from both sides of the hole 3b up to the main base portion 2, a pair of upper walls 3d extending perpendicularly from an upper position, a groove 3e formed between the paired upper walls 3d, retaining portions 3f formed respectively on upper surfaces of the paired upper walls 3d, and protrusions 3g.

Each of the paired sub-base portions 5 is provided with a convex portion 5a formed on an end face and having a roundish end.

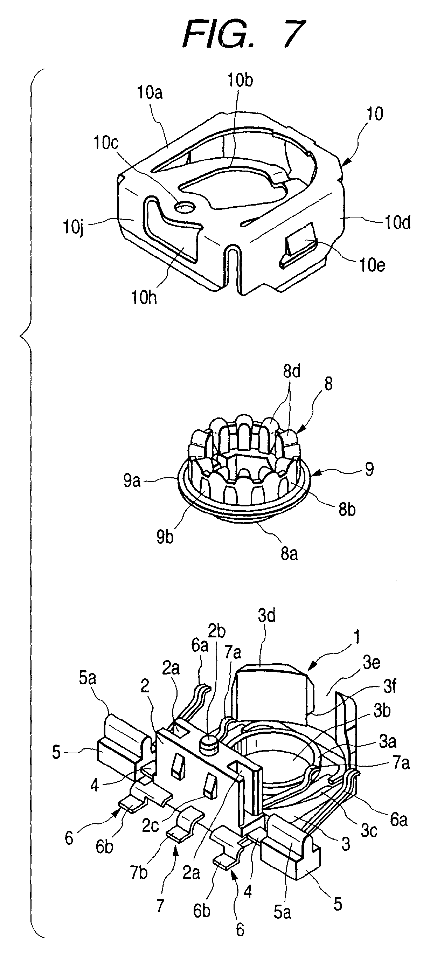

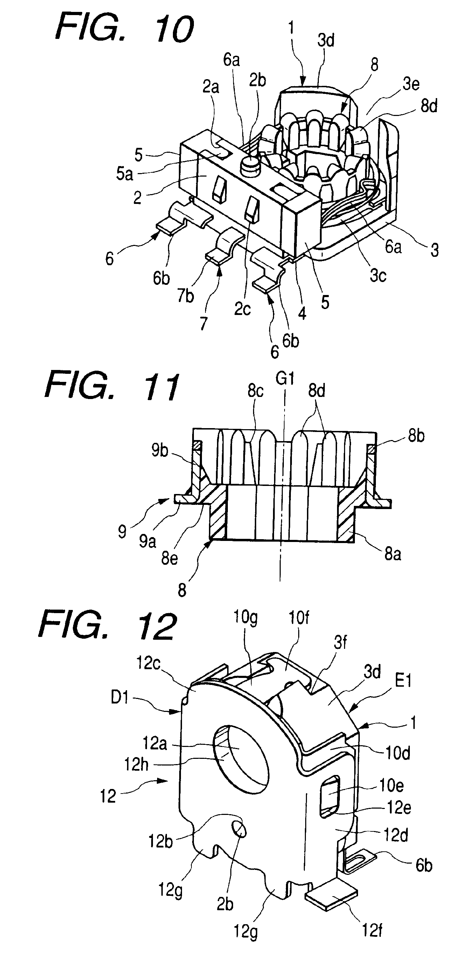

By bending the thin-walled portions 4 in the state shown in Fig. 7 and by press-fitting the protrusions 5a of the sub-base portions 5 into the recesses 2a of the main base portion 2 there is formed a rectangular insulating base 1, as shown in Fig. 10.

A plurality of contact pieces 6 each formed by a metallic plate are each provided with a contact portion 6a and a terminal portion 6b. The contact pieces 6 are respectively embedded in the sub-base portions 5. The contact portion 6a projects upward from an upper surface of the insulating base 1, while the terminal portion 6b projects downward from a lower surface of the insulating base 1 and a flat surface of an outer end thereof is bent so as to be positioned in parallel with and at substantially the same position as one end of the insulating base 1, i.e., the side wall portion 3.

A common contact piece 7, which is formed of a metal, is provided with a pair of contact portions 7a and a terminal portion 7b. The common contact piece 7 is embedded in the main base portion 2 at a position close to the side wall portion 3. The contact portions 7a project upward from the upper surface of the insulating base 1 and are positioned in the relief holes 3c of the side wall portion 3, while the terminal portion 7b projects downward from the lower surface of the insulating base 1.

In this embodiment, part of each embedded contact piece 6 straddles the main base portion 2 and the associated sub-base portion 5 and constitutes each thin-walled portion 4 as a connection between the main and sub-base portions 2, 5.

A metallic plate separate from that of the contact piece 6 may be embedded in the insulating base 1 to form each thin-walled portion 4. Further, the thin-walled portion 4 may be formed by the insulating material of the insulating base 1.

A cylindrical rotor 8, which is formed by molding an insulating material, comprises a shaft portion 8a provided on one end side, a holding portion 8b formed contiguously to the shaft portion 8a and having a diameter larger than the diameter of the shaft portion 8a, a concave-convex portion 8d for clicking which is formed on an end face 8c on one side of the holding portion 8b which end face is orthogonal to a rotational axis direction of the rotor, and end face 8e positioned between the shaft portion 8a and the holding portion 8b on an opposite side of the holding portion, the end face 8e being orthogonal to the rotational axis direction of the rotor, and a non-circular, hexagonal hole 8f formed centrally.

A code member 9, which is formed by a metallic plate, is provided with a ring-like plate portion 9a which forms a common pattern and a plurality of tongue pieces 9b which are bent from an inner periphery of the plate portion 9a and which form code patterns, as shown particularly in Fig. 11.

The code member 9 is embedded or press-fitted into the rotor 8. The ring-like plate portion 9a which forms a common pattern is positioned at the end face 8e of the rotor 8, while the tongue pieces 9b which form a code pattern are exposed to an outer circumferential surface of the holding portion 8b. The tongue pieces 9b extend in an axial direction G1 of the rotor 8.

The shaft portion of the rotor 8 is inserted into the hole 3b of the side wall portion 3, whereby the rotor 8 and the code member 9 both constituted as above are held rotatably.

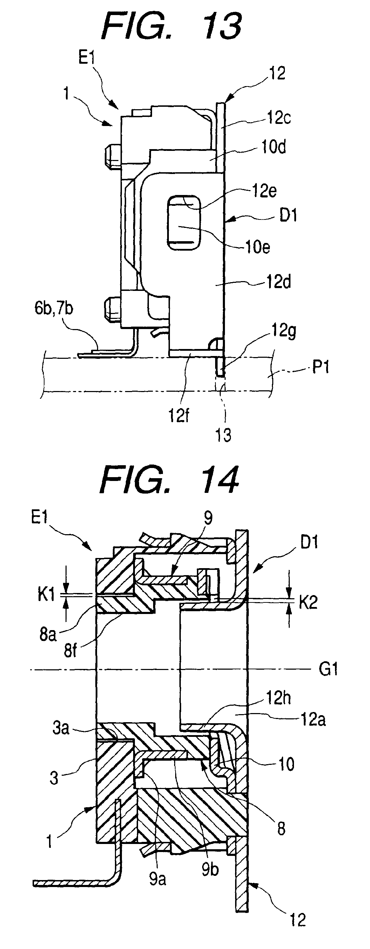

In this case, as shown in Fig. 14, the shaft portion 8a is fitted in the hole 3b loosely so as to create a small clearance K1, thereby permitting the rotor 8 to perform a tilting motion with respect to the insulating base 1.

When the rotor 8 is mounted to the insulating base 1, the paired contact portions 7a of the common contact piece 7 are opposed to the end face 8e and are in contact with the plate portion 9a as a common pattern of the code member 9.

With the rotor 8 mounted to the insulating base 1, the plural contact pieces 6 are positioned on opposite sides with the circumferential surface of the rotor therebetween and come into and out of contact with the tongue pieces 9b as code patterns of the code member 9, and a pair of contact portions 6a are brought into contact with the code patterns with a phase difference.

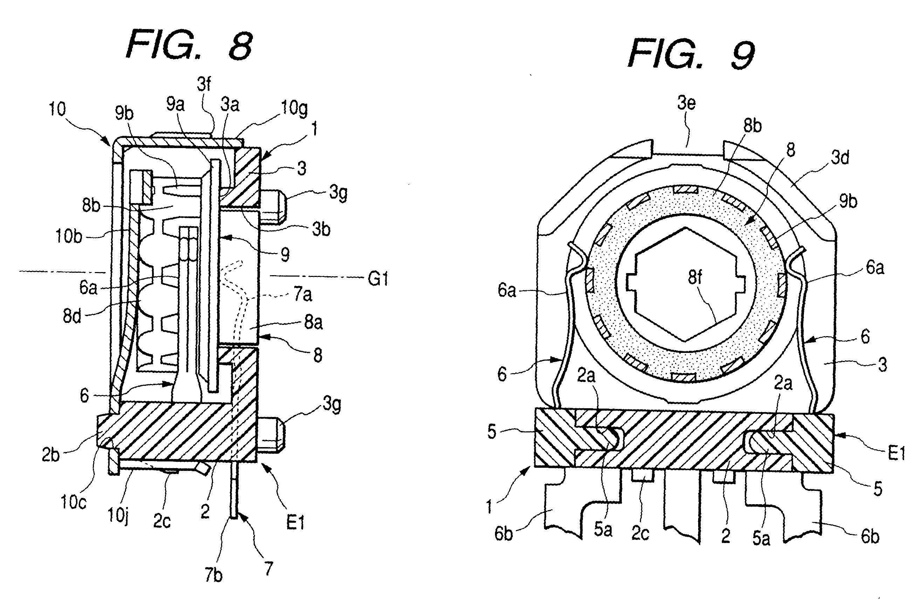

At this time, as shown in Fig. 8, the contact pieces 6 are located perpendicularly to the axial direction G1 and are put in sliding contact with the code patterns.

An engaging member 10, which is formed by a metallic plate, comprises a rectangular plate-like base portion 10a, an engaging portion 10b formed by cutting and bending a central part of the base portion 10 in a C shape, the engaging portion 10b having convex portions at free ends thereof, a circular hole 10c formed in a lower position of the base portion 10a, a pair of side plates 10d bent from both sides of the base portion 10a, cut and raised portions 10e formed in the side plates 10d respectively, a T-shaped upper-side plate 10g bent from an upper side of the base portion 10a and having a retaining portion 10f at a free end thereof, and a C-shaped lower-side plate 10j bent from a lower side of the base portion 10a and having a rectangular hole 10h formed centrally.

The engaging member 10 is aligned with the insulating base 1 so that the engaging portion 10b becomes opposed to the end face 8c of the rotor 8 having the concave-convex portion 8d, and then the protrusion 2b is inserted into the hole 10c.

Thereafter, the upper-side plate 10g is positioned on the upper walls 3d of the side wall portion 3 and is pushed in, allowing the retaining portion 10f to be engaged with the retaining portions 3f. Further, the upper-side plate 10g is positioned in the groove 3e and is secured to the side wall portion 3.

Simultaneously with the mounting of the upper-side plate 10g the lower-side plate 10j is positioned on the lower surface of the main base portion 2 and is pushed in, allowing the retaining portions 2c to be positioned in the hole 10h, whereby the lower-side plate 10j is locked to the retaining portions 2c and the lower-side plate 10j is secured to the main base portion 2.

In this way the engaging member 10 is mounted at both upper and lower positions relative to the rotor 8, while the side plates 10d are located at right and left positions respectively relative to the rotor 8.

When the engaging member 10 is mounted, the convex portions of the engaging portion 10b are engaged disengageably with the concave-convex portion 8d formed on the end face 8c of the rotor 8, constituting a click mechanism.

Further, the engaging member 10, the contact pieces 6 and the common contact piece 7 extend toward the rotor 8 with the insulating base 1 as a reference plane.

An encoder body E1 is formed by such a configuration.

As shown in Figs. 12 to 14, a mounting plate 12, which is constituted by a solderable metallic plate, comprises a flat plate portion 12c, the flat plate portion 12c having a cylindrical portion 12h formed with a large circular hole 12a centrally and also having a small hole 12b in a lower position, a pair of arm portions 12d bent opposedly from both sides of the flat plate portion 12c, rectangular holes 12e formed centrally of the arm portions 12d respectively, mounting portions 12f bent from side ends of the arm portions 12d, and projecting portions 12g provided on the mounting portions 12f side of the flat plate portion 12c.

As shown in Figs. 12 to 14, the mounting plate 12 is positioned on the engaging member 10 side of the encoder body E1 and the cylindrical portion 12h is positioned within the rotor 8, then in this state the protrusion 2b of the insulating base 1 is inserted into the small hole 12b.

Thereafter, the arm portions are pushed inwards on the side plates 10d of the engaging member 10, so that the cut and raised portions 10e are positioned in the holes 12e respectively and the arm portions 12d are engaged with the cut and raised portions 10e, whereby the mounting plate 12 is snap-fastened to the engaging member 10.

When the mounting plate 12 is thus mounted, the flat plate portion 12c is superimposed outside the plate-like base portion 10a of the engaging member 10, the arm portions 12d are mounted to the side plate 10d respectively at right and left positions with respect to the rotor 8.Lower surfaces of the mounting portions 12f bent from side ends of the arm portions 12d which extend in the axial direction G1 of the rotor 8 are located at approximately the same position as the L-shaped terminal portions 6b and 7b of the contact pieces 6 and the common contact piece 7 both extending from the lower surface of the insulating base 1.

When the mounting plate 12 is mounted, as shown in Fig. 14, a clearance K2 is formed between the cylindrical portion 12h and the rotor 8, the clearance K2 being larger than the clearance K1.

The rotor 8 is brought into abutment against the side wall portion 3 by the engaging member 10.

In this way there is formed a rotary encoder as the rotary electric part D. It goes without saying that the rotary encoder may be substituted by another rotary electric part.

In the rotary electric part D with the mounting plate 12 attached thereto, as shown in Fig. 13, the undersides of the main- and sub-base portions 2, 5 are brought into opposition to a printed circuit board P1 and the projecting portions 12g are inserted into holes 13 formed in the printed circuit board P1, whereby the rotary electric part D is established its position. At the same time, the terminal portions 6b and 7b of the contact pieces 6 and the common contact piece 7, and the mounting portions 12f of the mounting plate 12, are positioned on wiring patterns (not shown) formed on an upper surface of the printed circuit board P1.

The contact pieces 6, the common contact piece 7 and the mounting plate 12 thus constituted are surface-mounted to the wiring patterns by creamy solder and thus mounted to the printed circuit board P1, whereby the rotary electric part D is mounted to the printed circuit board in parallel with the axial direction G1 of the rotor 8.

A description will now be given about the operation of the rotary encoder as the rotary electric part D constructed as above. First, an operating member 18 to be described later is fitted and engaged into the hole 8f of the rotor 8 through the hole 12a of the mounting plate 12 and is then rotated, so that the rotor 8 and the code member 9 rotate with the shaft portion 8a as a support portion.

The concave-convex portion 8d of the rotor 8 performs engaging and disengaging motions for the engaging portion 10b to effect a click motion, the tongue pieces 9b come into and out of contact with the contact pieces 6, and the common contact piece 7 contacts the plate portion 9a constantly, with consequent generation of a two-phase pulse signal between the contact pieces 6 and the common contact piece 7.

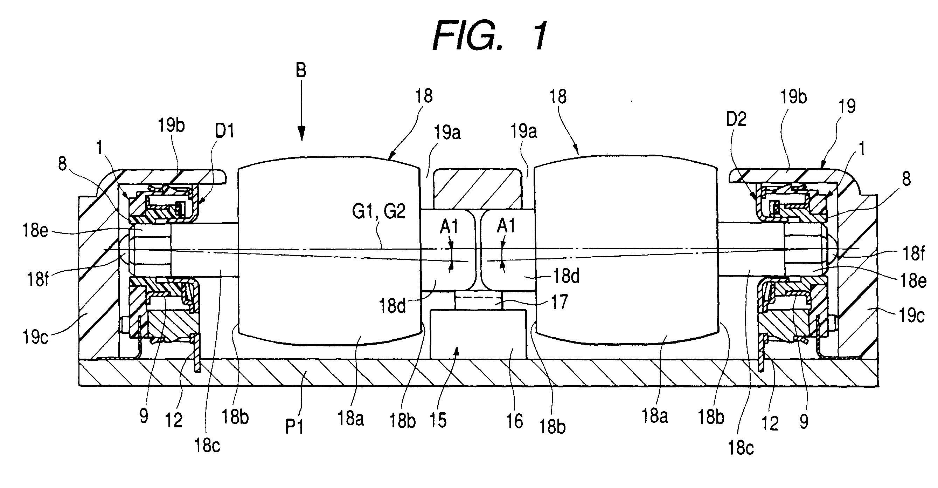

The following description is now provided about the first embodiment of the present invention. As shown in Fig. 1, first and second rotary electric parts D1, D2, as the rotary electric part D constituted as above, are mounted to the printed circuit board P1 spacedly in alignment with each other through mounting plates 12 which are opposed to each other, as shown in Fig. 1.

As shown in Fig. 1, a push-switch 15 is made up of a housing 16 which houses a contact portion (not shown) therein and a push-button 17 which is secured to the housing 16 vertically movably and which is urged upwards constantly. The push-switch 15 is mounted to the printed circuit board P1 at a position intermediate between the first and second rotary electric parts D1, D2 and on an extension of the axial direction G1.

First and second operating members 18, which are formed by molding a synthetic resin, each comprise a cylindrical operating portion 18a of a large diameter, a first cylindrical shaft 18c and a third cylindrical shaft 18d (or a second cylindrical shaft 18c and a fourth cylindrical shaft 18d) smaller in diameter than the operating portion 18a, the shafts 18c and 18d projecting in an axial direction G2 of the operating member 18 from central positions of both side faces 18b of the operating portion 18a, and a hexagonal, non-cylindrical, non-circular portion 18e formed at an end portion of the first (or the second) shaft 18c.

The first and second shafts 18c of the first and second operating members 18 are respectively inserted into the holes 12a from the mounting plates 12 side while being guided by the cylindrical portions 12h, and the non-circular portions 18e are fitted respectively in the non-circular holes 8f of the rotors 8.

At this time, the non-circular portions 18e and the holes 8f are fitted together tightly, leaving no play between the two in the rotational direction.

When the first and second shafts 18c are inserted into the holes 8f, protuberances 18f project outwards from the holes 8f and the other third and fourth shafts 18d are close to each other and abutted against the top of the push-button 17.

In this state, the axial directions G1 and G2 of the rotor 8 and the first and second operating members 18, respectively, are aligned with each other, as shown in Fig. 1.

As shown in Fig. 1, a case 19, which is formed by molding a synthetic resin, comprises an upper wall 19b having two parallel holes 19a, and side walls 19c extending downwards from the outer periphery of the upper wall 19b.

The case 19 is affixed to the printed circuit board P1 while covering the first and second rotary electric parts D1, D2 and also covering the push-switch 15. When the case 19 is thus mounted, part of the operating portions 18a of the first and second operating members 18 projects outwards from the holes 19a, the protuberances 18f are abutted against or close to side walls 19c, and the third and fourth shafts 18d are close to each other, to prevent the first and second operating members 18 from moving in the axial direction G2.

The third and fourth shafts 18d of the first and second operating members 18 are positioned close to each other and are simultaneously supported by the upper wall 19b.

Reference will now be made to the operation of the input device of this embodiment which is constituted as described above.

First, the operating portion 18a of the first operating member 18 projecting from the associated hole 19a is rotated with a finger, with consequent rotation of the first and third shafts 18c, 18d and subsequent rotation of the code member 9 together with the rotor 8 through the non-circular portion 18e, so that the contact pieces 6 come into sliding contact with the tongue pieces 9b as code patterns, producing a pulse signal.

There is made pre-setting so that the pulse signal is OFF when the engaging member 10 is engaged with a concave in the concave-convex portion 8d.

Next, if the operating portion 18a of the first operating member 18 is pushed in a direction B orthogonal to the axial direction G2, the operating member 18 tilts at a predetermined angle A1 on its second shaft 18d side with the first rotary electric part D1 as fulcrum, as shown in Fig. 2, with the result that the push-button 17 moves downward and the push-switch 15 is operated (contact ON to OFF or OFF to ON).

More specifically, the tilting motion of the first operating member 18 is performed in the following manner. As shown in Fig. 2, when the operating member 18 is pushed, first a lower portion of the shaft 8a of the rotor 8 comes into abutment with the side face of the insulating base 1 which defines the hole 3b. As the operating member 18 is further pushed, the rotor 8 begins to tilt with an abutment portion T1 as fulcrum and at the same time the outermost periphery of the plate portion 9a of the code member 9 abuts the insulating base 1 at an abutment portion T2. With both abutment portions T2 and T1 of the code member 9 and the shaft 8a, respectively, as fulcrums, the rotor 8 tilts, and with this tilting motion of the rotor, the operating member 18 also tilts together with the rotor.

As a result, the rotor 8 tilts at a predetermined angle A2 equal to that of the operating member 18 and the mounting plate 12-side portion of the rotor 8 moves to a greater extent than the insulating base 1-side portion thereof, but the presence of the large clearance K2 permits the tilting motion of the rotor 8.

Further, when the rotor 8 tilts, the code patterns (tongue pieces 9b) extending in the axial direction G1 and the contact pieces 6 disposed perpendicularly thereto are in contact with each other, provided the position of contact of the code patterns with the contact pieces 6 merely shifts downward, and therefore both are kept contacted positively.

Besides, since the position of contact of the contact pieces 6 with the tongue pieces 9b is close to the tilt center, the tongue pieces are less displaced at their contact portions with the contact pieces 6, thus making it difficult to produce unnecessary pulse signals.

Next, when the pressure imposed on the first operating member 18 is relieved, the third shaft 18d is restored to its original state by the urged push-button 17, so that the first operating member 18 and the rotor 8 are restored to their original horizontal state and the push-switch 15 also reverts to its original state. Thus, switching of contacts is performed.

During the tilting motion of the first operating member 18, the third shaft 18d is guided by a vertical groove (not shown) formed in the case 19 and thus its downward movement can be done accurately.

The operation for rotation and tilting of the second operating member 18 is the same as that for the first operating member 18 described above, so an explanation thereof will here be omitted. The input device of this embodiment is operated in the manner described above.

In the case where the input device of this embodiment is applied to a portable electronic device for example, a vertical scrolling operation is performed by the first electric device D1 through the first operating member 18 and a decision operation is performed by the push-switch 15, while a transverse scrolling operation is performed by the second electric part D2 through the second operating member 18 and a decision operation is performed by the push-switch 15. Thus, a multi-functional operation can be effected.

Moreover, since the first and second operating members 18 are aligned with each other, the above operations can be done by putting one finger of one hand on the first operating member and putting another finger on the second operating member and then moving the fingers.

Although in the above embodiment the tilting motion of the rotor 8 is conducted with the insulating base 1 as a support member, the mounting plate 12 or another member may be used as the support member.

Description is now directed to an input device according to the second embodiment of the present invention and a portable electronic device using the input device.

As to a rotary electric part D used in this embodiment, it is of the same configuration as that described above and so an explanation thereof will here be omitted, and the same components as in the input device of the previous first embodiment will be identified by the same reference numerals as in the first embodiment.

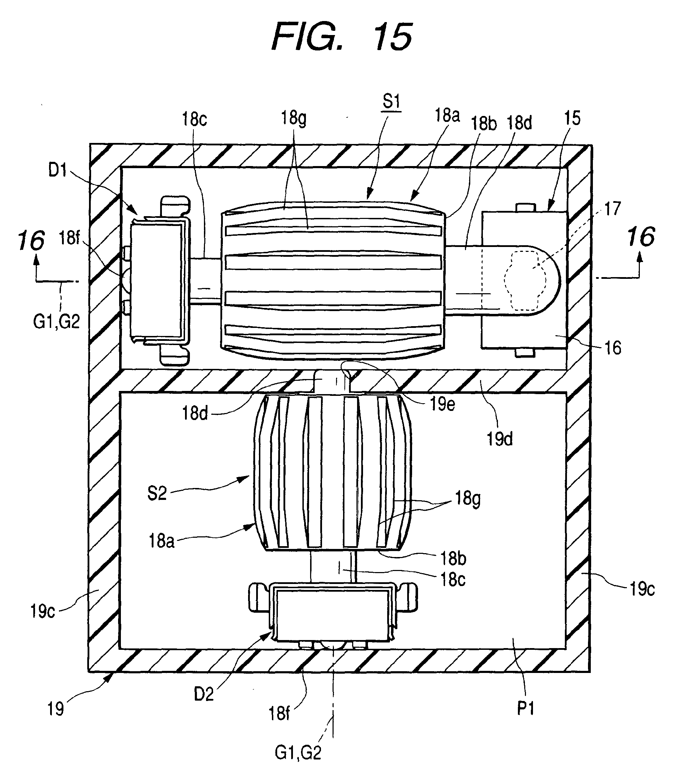

In the input device of this second embodiment, as shown in Fig. 15, first and second rotary electric parts D1, D2, as the rotary electric part D constituted as above, are mounted to a printed circuit board P1 in a state such that the respective axial directions G1 are orthogonal to each other.

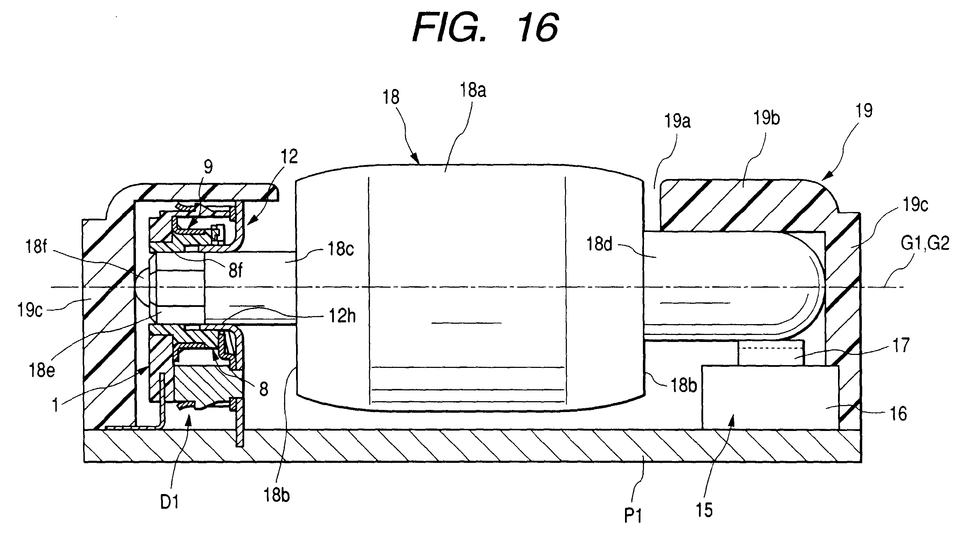

As shown in Figs. 15 to 18, a push-switch 15 is made up of a housing 16 which houses a contact portion (not shown) therein and a push-button 17 which is secured to the housing 16 vertically movably and which is urged upwards constantly. The push-switch 15 is mounted to the printed circuit board P1 on an extension of the axial direction G1 of the first rotary electric part D1.

First and second operating members 18, which are formed by molding a synthetic resin, each comprise a cylindrical operating portion 18a of a large diameter, a first cylindrical shaft 18c and a third cylindrical shaft 18d (or a second cylindrical shaft 18c and a fourth cylindrical shaft 18d) smaller in diameter than the operating portion 18a, the shafts 18c and 18d projecting in an axial direction G2 of the operating member 18 from central positions of both side faces 18b of the operating portion 18a, a hexagonal, non-cylindrical, non-circular portion 18e formed at an end portion of the first (or the second) shaft 18c, and a knurled portion 18g formed on the surface of the operating portion 18a.

Although in this embodiment the knurled portion 18g is formed by a concave-convex portion in the axial direction G2, it may be a knurled portion other than such concave-convex portion. For example, it may be a rough surface.

The first and second shafts 18c of the first and second operating members 18 are respectively inserted into holes 12a from a side of mounting plates 12 of the first and second rotary electric parts D1 and D2 while being guided by cylindrical portions 12h, and the non-circular portions 18e are fitted respectively in the non-circular holes 8f of the rotors 8.

At this time, the non-circular portions 18e and the holes 8f are fitted together tightly, leaving no play between the two in the rotational direction.

When the first and second shafts 18c are inserted into the holes 8f, protuberances 18f project outwards from the holes 8f and the other third and fourth shafts 18d are abutted against the top of the push-button 17.

In this state, the axial direction G1 of the rotor of the first rotary electric part D1 and the axial direction G2 of the first operating member 18 are aligned with each other and so are the axial direction G1 of the rotor 8 of the second rotary electric part D2 and the axial direction G2 of the second operating member 18, as shown in Fig. 15. Further, the first and second operating members 18 are positioned close to each other in one and the same plane in such a manner that the respective axial directions G2 are orthogonal to each other.

In this embodiment, the first and second operating members 18 are disposed in T shape so that the axial direction G2 of the second operating member 18 is located at an intermediate position in the axial direction G2 of the operating portion 18a of the first operating member 18.

The second operating member 18 may be shifted in the axial direction G2 from an intermediate portion of the first operating member 18 so that the first and second operating members 18 are arranged in L shape.

As shown in Figs. 15 to 17, a case 19, which is formed by molding a synthetic resin, comprises an upper wall 19b having two holes 19a formed in side positions of the T shape, side walls 19c extending downwards from the outer periphery of the upper wall 19b, and a partition wall 19d.

The case 19 is affixed to the printed circuit board P1 while covering the first and second rotary electric parts D1, D2 and also covering the push-switch 15. When the case 19 is thus mounted, part of the operating portions 18a of the first and second operating members 18 projects outwards from the holes 19a, the protuberances 18f are abutted against or close to side walls 19c, the third shaft 18d of the first operating member 18 is close to a side wall 19c, and the fourth shaft 18d of the second operating member 18 is fitted in a hole 19e formed in the partition wall 19d to prevent the first and second operating members 18 from moving in the axial direction G2.

At the same time, the third shaft 18d of the first operating member 18 is supported by the upper wall 19b.

Next, the operation of the input device of the second embodiment having the above configuration is described.

First, the operating portion 18a of the first operating member 18 projected from the associated hole 19a is rotated with a finger in a direction orthogonal to the axial direction G2, with consequent rotation of the first and second shafts 18c, 18d and subsequent rotation of a code member 9 together with the associated rotor 8 via the non-circular portion 18e, so that contact pieces 6 come into sliding contact with tongue pieces 9b as code patterns, producing a pulse signal.

There is made pre-setting so that the pulse signal is OFF when the engaging member 10 is engaged with a concave in a concave-convex portion 8d.

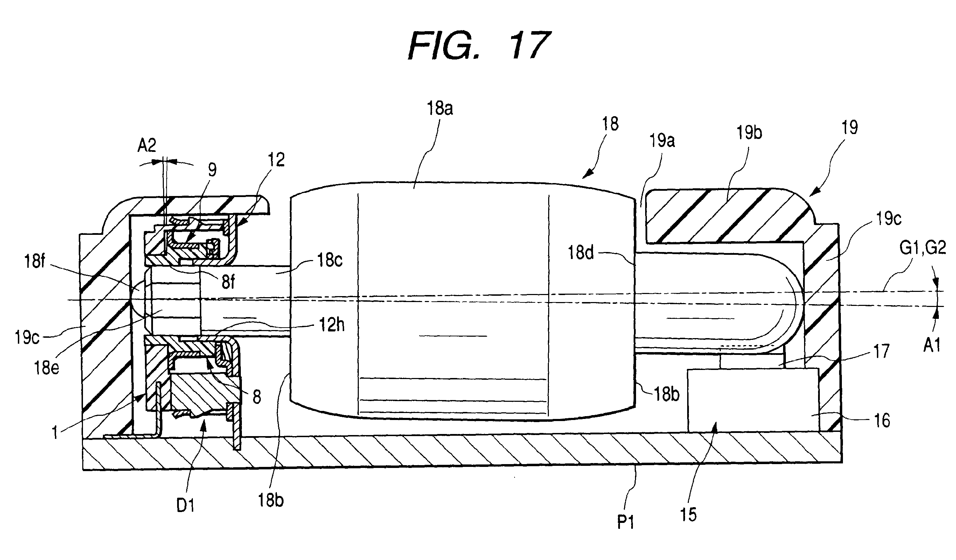

Next, if the operating portion 18a of the first operating member 18 is pushed in a direction perpendicular to the axial direction G2, the first operating member 18 tilts at a predetermined angle A1 on its third shaft 18d side with the first rotary electric part D1 as fulcrum, as shown in Fig. 17, with the result that the push-button 17 moves downward and the push-switch 15 is operated (contact ON to OFF or OFF to ON).

Detailed operations are the same as in the previous first embodiment.

Next, when the pressure exerted on the first operating member 18 is relieved, the third shaft 18d is restored to its original state by the urged push-button 17, so that the first operating member 18 and the rotor 8 are restored to their original horizontal state and the push-switch 15 also reverts to its original state. In this way there is made switching of contacts.

During the tilting motion of the first operating member 18, the third shaft 18d is guided by a vertical groove (not shown) formed in the case 19 and thus its downward movement can be done accurately.

Next, when the second operating member 18 is operated for rotation, it rotates while being supported by both the second rotary electric part D2 and the partition wall 19d. Its rotating motion is the same as in the case of the first operating member 18 described previously, so an explanation thereof will here be omitted. The input device of this embodiment is operated in this manner.

Where the input device of this second embodiment is applied to a portable electronic device for example, a vertical scrolling operation is performed by the first electric part D1 through the first operating member 18 and a decision operation is performed by the push-switch 15, while a transverse scrolling operation is performed by the second electric part D2 through the second operating member 18 and a decision operation is performed by the push-switch 15, thus permitting a multi-functional operation to be effected.

Besides, since the first and second operating members 18 are disposed perpendicularly to each other, the above operations can be carried out by putting a finger on the first operating member 18, operating the first operating member with the finger, and then shifting the finger, allowing the finger to be positioned on the second operating member 18. Thus, the second operating member 18 can be continuously operated subsequent to the first operating member, whereby the input device is superior in operability.

Although in the above second embodiment the tilting motion of the rotor 8 is performed with the insulating base 1 as a support member, the mounting plate 12 or another member may be used as the support member.

Although in the above second embodiment the second operating member 18 does not perform a tilting motion, there may be adopted, as is the case with the first operating member 18, a modification wherein another push-switch is disposed below the fourth shaft 18d of the second operating member 18 and is pushed with a tilting motion of the second operating member.

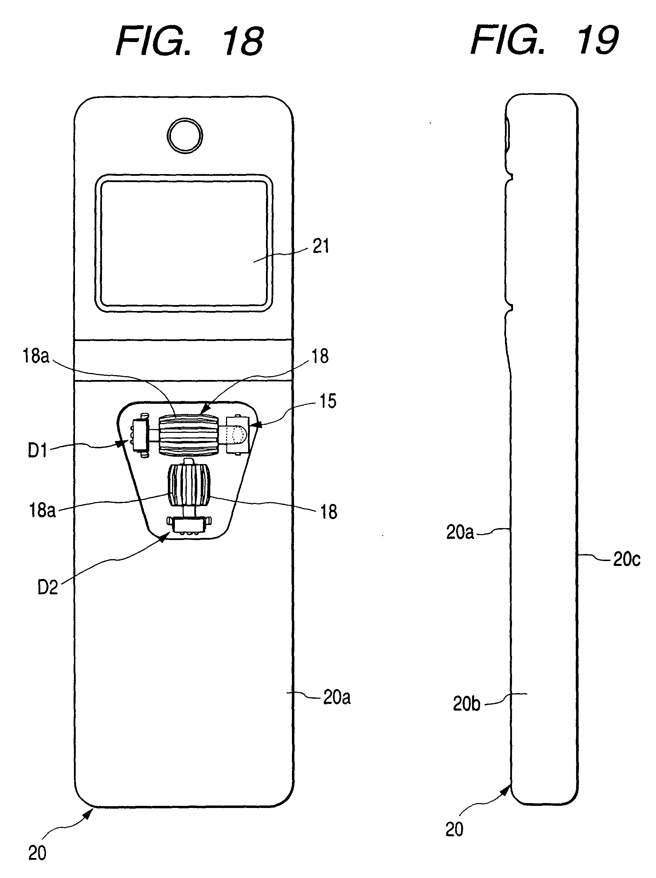

Next, the configuration of the portable electronic device according to the present invention will be described with reference to Figs. 18 and 19. A case 20, which is formed by molding a synthetic resin and which is in the shape of a rectangular parallelepiped, comprises a front wall 20a, side walls 20b extending from four sides of the front wall 20a, and a back wall 20c opposite to the front wall 20a. Various electric parts (not shown) are accommodated within the case 20, and a display 21 is provided in an upper position of the front wall 20a.

The input device of the above second embodiment is disposed within the case 20 at a position close to the display 21 and the operating portions 18a of the first and second operating members 18 are partially exposed from a hole (not shown) formed in the case 20.

Plural push-buttons, though not shown, are disposed on the front wall 20a of the case 20 at positions below the input device.

In the portable electronic device, the case 19 may be substituted by the case 20. Although the input device of the above second embodiment is used in the portable electronic device, it may be substituted by the input device of the above first embodiment.

The portable electronic device having such a configuration is operated in the same way as in the input device of the above second embodiment, which operation is performed while checking display contents on the display 21.

Since the first and second rotary electric parts D1, D2 are operated by the first and second operating members 18 respectively, a larger number of functions than in the prior art can be provided and therefore the input device according to the present invention is suitable for use in a portable electronic device for which various functions are required.

Moreover, the operating portions 18a for performing motions in directions orthogonal to the axial directions G2 of the first and second operating members 18 are provided on the outer peripheral portions in the axial directions G2 of the operating members respectively, and the first and second operating members 18 are positioned close to each other in one and the same plane so that the respective axial directions G2 are orthogonal to each other. Consequently, it is possible to attain the reduction of size, and if a finger is put on the first operating member 18 and is shifted after operating the first operating member, the finger comes to be positioned on the second operating member, permitting the second operating member 18 to be operated in a continuous manner. Thus, the input device according to the present invention is superior in operability and convenient for use.

Since the first and second operating members 18 are disposed in T shape and the axial direction G2 of the second operating member 18 lies at an intermediate position in the axial direction G2 of the operating portion 18a of the first operating member 18, the input device according to the present invention is nice-looking and is superior in operability because the second operating member 18 can be operated by merely shifting a finger slightly from the first operating member 18.

Further, since the first and second operating members 18 are disposed in L shape, the second operating member 18 can be operated by merely shifting a finger from the first operating member 18 to the second and thus input device according to the present invention is superior in operability.

Since the knurled portion 18g is formed on the surface of the operating portion 18a and is formed by a concave-convex portion in the axial direction G2 of each operating member 18, slipping is difficult to occur when operating the operating portion 18a. Besides, since the concave-convex portions formed on both operating portions 18a are orthogonal to each other, the operation of the other operating portion 18a is difficult to be done during the operation of one operating portion 18a. The input device according to the present invention is thus superior in operability.

Further, one of the first and second operating members 18 can tilt with the associated rotary electric part as fulcrum when pushed in a direction orthogonal to the axial direction G2 thereof. With this tilting motion, the push-switch 15 is operated; that is, the rotating operation can be followed by operation of the push-switch 15 in a continuous manner. The input device according to the present invention is thus superior in operability.

Further, both first and second operating members 18 can tilt with the rotary electric parts as fulcrums when pushed in directions orthogonal to the respective axial directions G2, and the push-switch 15 is operated with their tilting motions. Thus, the first and second operating members can operate the push-switch 15 continuously following their rotating motions. The input device according to the present invention is thus superior in operability.

Further, the portable electric device according to the present indention comprises the case 20 having the display 20a in the front wall 20a, the first operating member 18 for operating the first rotary electric part D1 disposed within the case 20, the first operating member 18 being rotatable, and the second operating member 18 for operating the second rotary electric part D2 disposed within the case 20, the second operating member 18 being also rotatable, the first and second operating members 18 being each provided on the outer periphery in the axial direction G2 thereof with the operating portion 18a for performing an operation in a direction orthogonal to the axial direction G2, the first and second operating members 18 being disposed so as to be positioned close to each other in one and the same plane, allowing the respective operating portions 18a to be partially exposed from the front wall 20a of the case 20, and so that the respective axial directions G2 are orthogonal to each other. According to this configuration, it is possible to increase the number of functions available and attain the reduction of size. Besides, if a finger is put on the first operating member 18 and is shifted after operating the first operating member 18, it comes to be positioned on the second operating member 18 and thus the second operating member can be operated in a continuous manner following the operation of the first operating member. The portable electronic device according to the present invention is thus superior in operability and convenient for use.

Since the operating portions 18a are positioned close to the display 21, it is easy to effect operation while looking the display. Thus, the portable electronic device according to the present invention is superior in operability.

Further, since the first and second operating members 18 are arranged in T shape, the second operating member 18 can be operated by merely shifting a finger from the first operating member 18. Thus, the portable electronic device according to the present invention is superior in operability and convenient for use.

Further, since the first and second operating members 18 are arranged in L shape, the second operating member 18 can be operated by merely shifting a finger from the first operating member 18 to the second and thus the portable electronic device according to the present invention is superior in operability.

Since the knurled portion 18g is formed on the surface of the operating portion 18a and is formed by a concave-convex portion in the axial direction G2 of each operating member 18, slipping is difficult to occur when operating the operating portion 18a. Besides, since the concave-convex portions formed on both operating portions 18a are orthogonal to each other, the operation of the other operating portion 18a is difficult to be done during the operation of one operating portion 18a. Thus, the portable electronic device according to the present invention is further improved in operability.

Further, one of the first and second operating members 18 can tilt with the associated rotary electric part as fulcrum when pushed in a direction orthogonal to the axial direction G2 thereof. With this tilting motion, the push-switch 15 is operated; that is, the rotating operation can be followed by operation of the push-switch 15 in a continuous manner. The portable electronic device according to the present invention is thus superior in operability.

Further, both first and second operating members 18 can tilt with the rotary electric parts as fulcrums when pushed in directions orthogonal to the respective axial directions G2, and the push-switch 15 is operated with the tilting motion of the first or the second operating member 18. Thus, the first and second operating members can operate the push-switch 15 continuously following their rotating motions. The portable electronic device according to the present invention is thus superior in operability.

Since the first and second rotary electric parts D1, D2 are operated by the first and second operating members 18 respectively, a larger number of functions than in the prior art can be provided and therefore the input device according to the present invention is suitable for use in a portable electronic device for which various functions are required.

Since the first and second operating members 18 are positioned in alignment with each other, both can be operated respectively with a finger of one hand put on the first operating member and another finger put on the second operating member. Thus, the input device according to the present invention is superior in operability and convenient for use.

Further, the first and second operating members 18 are respectively provided with operating portions 18a, first and second shafts 18c, and third and fourth shafts 18d located on the sides opposite to the first and second shafts 18c with respect to the operating portions 18a, the third and fourth shafts 18d being positioned close to each other. Thus, the first and second operating members 18 can be positioned close to each other, that is, the operability is improved; besides, it becomes easier for the input device to be supported by the case 19 and there can be attained the reduction of size and simplification of configuration.

Further, one push-switch 15 is disposed below the third and fourth shafts 18d so as to straddle both shafts, and when the first or the second operating member 18 tilts when pushed in a direction orthogonal to the axial direction thereof, the push-switch 15 is operated thereby. Thus, the push-switch 15 can be used in common to two operating members 18 and therefore the input device according to the present invention can be reduced in both size and cost.

Further, in the input device used in the portable electronic device according to the present invention, the first and second rotary electric parts D1, D2 are operated by the first and second operating members 18 which are disposed in alignment with each other. Therefore, the portable electronic device is simple in operation and can utilize various functions.

## Claims

1. An input device comprising:
a first operating member for operating a first rotary electric part, the first operating member being rotatable; and
a second operating member for operating a second rotary electric part, the second operating member being rotatable,
the first and second operating members being each provided, on an outer peripheral portion in an axial direction thereof, with an operating portion for performing an operation in a direction orthogonal to the axial direction, the first and second operating members being disposed so as to be positioned close to each other in one and the same plane and so that the respective axial directions are orthogonal to each other.

2. An input device according to claim 1, wherein the first and second operating members are arranged in T shape so that the axial direction of the second operating member intersects the axial direction of the first operating member at an intermediate position in the axial direction of the operating portion of the first operating member.

3. An input device according to claim 1, wherein the first and second operating members are arranged in L shape.

4. An input device according to claim 1, 2 or 3, wherein a knurled portion is formed on a surface of each of the operating portions, the knurled portion being formed by a concave-convex portion in the axial direction of the associated operating member.

5. An input device according to any of claims 1 to 4_{*p*} wherein one of the first and second operating members can tilt with the associated first or second rotary electric part as fulcrum when pushed in a direction perpendicular to the axial direction thereof, and a push-switch is operated by the tilting motion.

6. An input device according to any of claims 1 to 4, wherein both the first and second operating members can tilt with the first and second rotary electric parts as fulcrums when pushed in directions perpendicular to the respective axial directions, and a push-switch is operated by the tilting motion of each of the first and second operating members.

7. A portable electronic device comprising:
a case having a display in a front wall thereof;
a first operating member for operating a first rotary electric part disposed within the case, the first operating member being rotatable; and
a second operating member for operating a second rotary electric part disposed within the case, the second operating member being rotatable,
the first and second operating members being each provided, on an outer peripheral portion in an axial direction thereof, with an operating portion for performing an operation in a direction orthogonal to the axial direction, the first and second operating members being disposed so as to be positioned close to each other in one and the same plane, allowing the respective operating portions to be partially exposed from the front wall of the case, and so that the respective axial directions are orthogonal to each other.

8. A portable electronic device according to claim 7, wherein the operating portions of the first and second operating members are positioned close to the display.

9. A portable electronic device according to claim 7 or 8, wherein the first and second operating members are arranged in T shape.

10. A portable electronic device according to claim 7 or 8, wherein the first and second operating members are arranged in L shape.

11. An portable electronic device according to any of claims 7 to 10, wherein a knurled portion is formed on a surface of each of the operating portions, the knurled portion being formed by a concave-convex portion in the axial direction of the associated operating member.

12. A portable electronic device according to any of claims 7 to 11, wherein one of the first and second operating members can tilt with the associated first or second rotary electric part as fulcrum when pushed in a direction perpendicular to the axial direction thereof, and a push-switch is operated by the tilting motion.

13. A portable electronic device according to any of claims 7 to 11, wherein both the first and second operating members can tilt with the first and second rotary electric parts as fulcrums when pushed in directions perpendicular to the respective axial directions, and a push-switch is operated by the tilting motion of each of the first and second operating members.

14. An input device comprising:
a first rotary electric part having a rotor;
a first operating member for operating the first rotary electric part, the first operating member having a first shaft fitted in a non-circular hole formed in the rotor of the first rotary electric part;
a second rotary electric part having a rotor; and
a second operating member for operating the second rotary electric part, the second operating member having a second shaft fitted in a non-circular hole formed in the rotor of the second rotary electric part,
the first and second operating members being positioned in alignment with each other.

15. An input device according to claim 14, wherein the first operating member is further provided with an operating portion and a third shaft, and the second operating member is further provided with an operating portion and a fourth shaft, the third and fourth shafts being disposed in proximity to each other.

16. An input device according to claim 15, wherein one push-switch is disposed below the third and fourth shafts so as to straddle both shafts, the first or the second operating member tilts when pushed in a direction perpendicular to its axial direction, and the push-switch is operated thereby.

17. A portable electronic device having an input device, the input device comprising:
a first rotary electric part having a rotor;
a first operating member for operating the first rotary electric part, the first operating member having a first shaft fitted in a non-circular hole formed in the rotor of the first rotary electric part;
a second rotary electric part having a rotor; and
a second operating member for operating the second rotary electric part, the second operating member having a second shaft fitted in a non-circular hole formed in the rotor of the second rotary electric part, the first and second operating members being positioned in alignment with each other.
